# FASCICULE DE BREVET EUROPEEN

(11) **EP 3 102 054 B1**
(45) Date de publication et mention de la délivrance du brevet: **15.07.2020**
(21) Numéro de dépôt: 15707694.4
(22) Date de dépôt: 03.02.2015
(51) Int. Cl.: A23L 33/21, A23K 10/00, A23L 5/00, A23L 33/00, A23L 33/10

(54) **PRODUIT NUTRITIONNEL A BASE D'INSECTES**
INSEKTENBASIERTES ERNÄHRUNGSPRODUKT
INSECT BASED NUTRIONAL PRODUCT

(30) Priorité: 05.02.2014 FR 1450891
(43) Date de publication de la demande: 14.12.2016
(73) Titulaire: Lopez, Cathy, 24270 Lanouaille (FR); Lopez, Samuel, Maurice, 24270 Lanouaille (FR)
(72) Inventeur: Lopez, Cathy, 24270 Lanouaille (FR); Lopez, Samuel, Maurice, 24270 Lanouaille (FR)
(74) Mandataire: Aquinov
(86) Numéro de dépôt international: PCT/FR2015/050236
(87) Numéro de publication internationale: WO 2015/118253

(56) Documents cités:
- CN-A- 101 810 154
- CN-A- 101 869 206
- CN-A- 102 334 669
- CN-A- 102 835 546
- FR-A1- 2 630 008
- NL-A- 7 608 640
- US-A1- 2012 148 712
- US-A1- 2013 267 027
- DATABASE WPI Week 201365 Thomson Scientific, London, GB; AN 2013-Q25348 XP002730245, & CN 103 070 314 A (NANCHANG JINGCAI IND CO LTD) 1 mai 2013 (2013-05-01)
- DATABASE CAPLUS [Online] CHEMICAL ABSTRACTS SERVICE, COLUMBUS, OHIO, US; 30 août 2007 (2007-08-30), Wei: "Natural and high-protein health bolus and its preparation", XP002730238, Database accession no. 2007:968895
- DATABASE WPI Week 200902 2009 Thomson Scientific, London, GB; AN 2009-A35220 XP002730239, & CN 101 116 471 A (XIAN LIGHT IND INST) 6 février 2008 (2008-02-06)
- DATABASE WPI Week 200841 Thomson Scientific, London, GB; AN 2008-G34871 XP002730241, & CN 101 116 472 A (XIAN LIGHT IND RES INST) 6 février 2008 (2008-02-06)
- DATABASE CAPLUS [Online] CHEMICAL ABSTRACTS SERVICE, COLUMBUS, OHIO, US; 2 avril 2012 (2012-04-02), Wu: "Mixed feed for lateolabrax japonicus and manufacture thereof", XP002730242, extrait de STN Database accession no. 2012:477165 & CN 102 389 039 A (NINGBO TECH BANK CO LTD) 28 mars 2012 (2012-03-28)
- DATABASE CAPLUS [Online] CHEMICAL ABSTRACTS SERVICE, COLUMBUS, OHIO, US; 22 novembre 2010 (2010-11-22), Wang: "Feed for Melanocorypha mongolica and ist manufacture method", XP002730243, extrait de stn Database accession no. 2010:1441739 & CN 101 884 384 A (XIANDE WANG) 17 novembre 2010 (2010-11-17)
- DATABASE CAPLUS [Online] CHEMICAL ABSTRACTS SERVICE, COLUMBUS, OHIO, US; 6 juillet 2010 (2010-07-06), Zhang: "Tortoise feed with rich nutrients", XP002730244, extrait de stn Database accession no. 2010:828037 & CN 101 756 060 A (WENBIN ZHANG) 30 juin 2010 (2010-06-30)
- LI J ET AL: "Feed used for coloring aquarium fish, prepared by uniformly mixing paprika powder with corn and soybean meal, crushing, adding pepper powder and additive, mixing uniformly, drying, granulating, and packaging obtained product", WPI / THOMSON,, vol. 2013, no. 65, 1 May 2013 (2013-05-01) , XP002730245, & CN 103 070 314 A (NANCHANG JINGCAI INDUSTRY CO LTD) 1 May 2013 (2013-05-01)

## Description

La présente invention se rapporte à un produit nutritionnel contenant des insectes pour une utilisation comme aliment ou complément alimentaire destiné à l'homme, à l'animal ou aux loisir comme à la pêche notamment.

Dans nos sociétés actuelles, de nombreux aliments proposés sont mauvais sur le plan diététique en raison notamment de leur faible valeur nutritive et de leur forte teneur en graisses et/ou en sucres. Leur surconsommation est à l'origine de maladies graves comme l'obésité, le diabète, des maladies cardiovasculaires, certains cancers ou encore des dépressions.

Pour lutter contre ce phénomène, on recherche des produits alimentaires sains, d'origine naturelle, qui répondent aux besoins nutritionnels des hommes ou des animaux.

A cet effet, l'invention propose un produit spécifique contenant des insectes. En particulier, l'invention vise un produit nutritionnel destiné à l'homme ou l'animal se présentant sous forme de granulé, comprimé, granule, pellet, bille, agglomérat ou pastille, de taille comprise entre 1 et 15 mm, constitué d'une poudre agglomérée et éventuellement d'un liant d'origine végétale, animale ou minérale, caractérisé en ce que :
- ladite poudre-est constituée :
   - de poudre d'insectes, non traitée chimiquement, constituée par au moins un insecte choisi parmi : les vers, les grillons, les criquets et les blattes, et
   - éventuellement de farine d'origine végétale et/ou de poudre d'origine algale,
- au moins 50% en poids de ladite poudre est de la poudre d'insectes, et
- la teneur en protéines dans ladite poudre est comprise entre 15 et 70% en poids par rapport au poids total des constituants de la poudre.

Il existe environ 1600 espèces d'insectes comestibles qui sont consommés à travers le monde. Dans de nombreux pays, en particulier en Asie, en Afrique, en Amérique du Sud ou encore en Belgique, ils constituent des mets très raffinés et très prisés. En outre, depuis plusieurs années, on sait que les insectes présentent des qualités nutritives intéressantes. En particulier, les insectes contiennent plus de protéines que la majorité des poissons et des viandes consommés par l'homme ou l'animal. Ils contiennent également une quantité intéressante de sels minéraux comme le phosphore, le potassium, le zinc, le calcium, le magnésium, le fer et diverses vitamines, et sont par ailleurs faibles en matières grasses et en cholestérol. De plus, les insectes étant des arthropodes à sang froid et hébergeant généralement peu de bactéries méthanogènes, leur efficacité écologique (rapport entre la biomasse produite et la quantité d'aliments ingérés) s'en trouve augmentée.

Toutefois la consommation d'insectes dans les pays occidentaux est peu courante car elle nécessite des modifications dans les habitudes alimentaires, du fait d'une certaine réticence à ce type de nourriture. En Europe en particulier, les insectes comestibles inspirent généralement méfiance, peur et dégoût.

Le produit de nutrition selon l'invention permet de résoudre cette problématique de par sa forme adaptée.

Des compléments alimentaires contenant des insectes ont déjà été décrits notamment en Asie, mais ils se présentent généralement sous forme de capsules et sont mélangés à de nombreux autres constituants.

Il a notamment été décrit dans la demande de brevet NL 7608640, une composition nutritionnelle pour animaux comprenant de la poudre d'insectes, en particulier une poudre de mouche, pouvant se présenter sous forme de tablette.

Le demande US 2012/148712 décrit des compositions nutritionnelles pour humains comprenant une ou plusieurs poudre d'insectes notamment de criquet, poudre de mouches, de ténébrion et de grillon pouvant se présenter sous forme agglomérée ou sous forme de barre alimentaire.

L'article « Feed used for coloring aquarium fish, prepared by uniformly mixing paprika powder with corn and soybean meal, crushing, adding pepper powder and additive, mixing uniformly, drying, granulating, and packaging obtained product », Li J et al. Thomson, vol 2013, no 65, décrit une composition nutritionnelle sous forme de granules pour animaux comprenant de la poudre de ténébrion, de la farine végétale, du blé et de la farine de poisson.

La demande FR 2630008 décrit des compositions comprenant de la poudre de vers séchée et des ingrédients nutritionnels, sous forme de granule. La teneur en poudre d'insectes est supérieur à 50% en poids.

La demande CN 101810154 décrit une poudre d'insecte sous forme pulvérulente et donc non agglomérée. En outre, aucune teneur en protéine n'est décrite.

La demande CN 102334669 décrit une sauce alimentaire et non une poudre.

La demande CN 102835546 décrit une poudre comprenant de la poudre d'insecte, de la poudre de pomme de terres et de la poudre d'algues. Cette poudre ne contient pas 50% ou plus de poudre d'insectes.

La demande CN 101869206 décrit un appât pour la pêche contenant de la poudre d'insectes. La demande US 2013/267027 décrit des milieux de culture cellulaire sous forme de granulés secs ne comprenant ni peptones, ni de tryptones.

Avantageusement très concentré en insectes, le produit selon l'invention est entièrement naturel et facilement assimilable. Il peut être utilisé aussi bien dans l'alimentation humaine ou animal ou bien comme complément alimentaire ou encore dans les loisirs de pêche comme leurre, appât, amorce, etc. La quantité importante d'insectes contenu dans le produit et sa forme permettent de conserver toutes les qualités nutritives des insectes mais également gustatives. Il présente aussi une odeur attractive.

D'autres avantages et inconvénients du produit ressortiront de la description en détails de l'invention qui va suivre.

L'invention a donc pour objet un produit nutritionnel destiné à l'homme ou l'animal se présentant sous forme de granulé, comprimé, granule, pellet, bille, agglomérat ou pastille, de taille comprise entre 1 et 15mm. Il est constitué d'une poudre agglomérée et éventuellement d'un liant d'origine végétale, animale ou minérale, ladite poudre est constituée de poudre d'insectes, non traitée chimiquement, constituée par au moins un insecte choisi parmi : les vers, les grillons, les criquets et les blattes, et éventuellement de farine d'origine végétale et/ou de poudre d'origine algale. Au moins 50% en poids de ladite poudre est de la poudre d'insectes, et la teneur en protéines dans ladite poudre est comprise entre 15 et 70% en poids par rapport au poids total des constituants de la poudre.

Par poudre on entend un état sous forme solide finement broyée.

Par poudre d'insectes, on entend au sens de l'invention des insectes broyés finement se présentant sous forme de poudre.

Par poudre d'origine algale ou poudre algale, on entend au sens de l'invention des algues broyées finement se présentant sous forme de poudre.

La poudre de végétaux est appelée farine. La farine d'origine végétale est donc une poudre d'origine végétale, c'est-à-dire des végétaux broyés finement se présentant sous forme d'une poudre.

La poudre contenue dans le produit selon l'invention comprend obligatoirement de la poudre d'insectes. Cette poudre d'insectes est non traitée chimiquement, c'est-à-dire qu'il s'agit d'insectes, éventuellement préalablement séchés ou traités par des procédés non chimiques, puis broyés, et la poudre obtenue n'est pas non plus traitée chimiquement.

La poudre contenue dans le produit selon l'invention, en plus de la poudre d'insectes, peut comprendre éventuellement de la farine de végétaux et/ou de la poudre algale. La poudre comprend au moins 50% de poudre d'insectes (pourcentage en poids par rapport au poids total de poudre).

Dans le produit selon l'invention, la poudre d'insectes comprend un seul type d'insectes ou bien la poudre d'insectes comprend plusieurs types d'insectes différents (au moins deux). Les insectes peuvent être choisis parmi les vers, les grillons, les criquets et/ou les blattes. En particulier vers suivants : les ténébrions et les vers de Morios..

Selon un mode de réalisation particulièrement adapté, la poudre d'insecte est constituée par un mélange de poudre de vers et de poudre de grillons.

La poudre d'insectes est constituée d'insectes entiers ou de parties d'insectes, séchés et broyés. Les insectes sont d'abord abattus, préférentiellement par froid négatif et/ou ébouillantage en fonction de l'espèce. Ils peuvent également être dégraissés par action mécanique à chaud ou à froid, par exemple à l'aide d'un pressoir. Ils sont ensuite préférentiellement déshydratés par exemple à l'aide d'un déshydrateur. Une fois séchés, ils sont broyés en particules plus ou moins importantes pour former une poudre.

La poudre constituant le produit nutritionnel selon l'invention peut contenir de la farine d'origine végétale. La farine d'origine végétale comprend un seul type de végétaux ou bien elle comprend plusieurs types de végétaux différents (au moins deux). Les végétaux sont préférentiellement des céréales, en particulier du maïs, du blé, du soja, des légumes, des légumineuses, des fruits, des herbes comestibles et/ou des herbes médicinales.

La farine d'origine végétale est constituée de végétaux entiers ou de parties de végétaux, séchés et broyés. Les végétaux peuvent être séchés naturellement ou à l'aide d'un déshydrateur par exemple. Une fois séchés, ils sont broyés en particules plus ou moins importantes pour former une farine.

La poudre constituant le produit nutritionnel selon l'invention peut aussi contenir de la poudre d'algues. La poudre d'origine algale comprend un seul type d'algues ou bien elle comprend plusieurs types d'algues (au moins deux). Les algues peuvent être choisies parmi toutes les algues comestibles : algues vertes, algues rouges, algues bleues. Les algues contenues dans le produit nutritionnel selon l'invention sont préférentiellement choisies parmi une ou plusieurs des algues suivantes : laitue de mer, ao nori, ulve, dulse, nori, carraghénanes, wakamé, kombu, aramé, spiruline, chlorella.

Selon une première variante, la poudre du produit nutritionnel selon l'invention est constituée par 100% de poudre d'insectes, non traitée chimiquement. Le produit ne contient que de la poudre d'insectes et éventuellement un liant.

Selon une deuxième variante, la poudre du produit nutritionnel selon l'invention est constituée entre 50 et 90% en poids de poudre d'insectes et entre 10 et 50% en poids de farine d'origine végétale (les pourcentages étant donnés en poids par rapport au poids total de la poudre). De façon préférée, la farine du produit nutritionnel est constituée de 50% de farine d'insectes et de 50% de farine d'origine végétale.

Selon une troisième variante, la poudre du produit nutritionnel selon l'invention est constituée entre 50 et 90% en poids de poudre d'insectes et entre 10 et 50% en poids de farine d'origine algale (les pourcentages étant donnés en poids par rapport au poids total de la poudre). De façon préférée, la poudre du produit nutritionnel est constituée de 50% de poudre d'insectes et de 50% de poudre d'origine algale.

Selon une quatrième variante, la farine du produit nutritionnel selon l'invention est constituée entre 50 et 90% en poids de poudre d'insectes et entre 10 et 50% en poids d'un mélange de farine d'origine végétale et de poudre d'origine algale (les pourcentages étant donnés en poids par rapport au poids total de la poudre).

La taille des particules de la poudre d'insectes, de la farine de végétaux et de la poudre d'algues peut être identique ou différente. On préfèrera notamment une taille de particules de poudre d'insectes plus petite que la taille des particules de végétaux et/ou d'algues.

Le produit nutritionnel selon l'invention contient uniquement de la poudre (constituée d'insectes et/ou de végétaux et/ou d'algues) et éventuellement un liant pour faciliter l'agglomération des particules de farine.

Le liant est un liant naturel préférentiellement choisi parmi les liants d'origine végétale, animale ou minérale. Il peut s'agir notamment d'un liant choisi parmi les produits suivants :
- l'amidon ou la fécule,
- l'agar agar,
- la gomme arabique,
- le beurre manier,
- le roux,
- la farine ou farine fonctionnelle,
- les fruits secs et/ou les dattes,
- le chia et/ou le lin,
- la mousse irlandaise,
- la lécithine de soja,
- le miel,
- l'argile,
ou est un mélange d'au moins deux de ces produits.

Le produit nutritionnel selon l'invention peut être obtenu par des techniques connues telles que la granulation, le compactage ou le soufflage de la farine avec ou sans liant et éventuellement en présence d'eau.

En particulier, le produit selon l'invention peut être obtenu notamment à l'aide d'une presse, d'une extrudeuse, d'un granulateur, d'une presse ou d'une comprimeuse. Il peut éventuellement également être fabriqué par un procédé d'atomisation des particules de poudre réalisé dans une tour de séchage et en particulier dans une tour dite « multiple effets » conduisant les particules à s'agglomérer les unes aux autres après plusieurs passages dans la tour de séchage.

Avantageusement l'invention permet de fournir des produits très riches en protéines. La poudre du produit selon l'invention, contient au moins 15% en poids de protéines par rapport au poids total des constituants de la poudre, préférentiellement entre 15 et 70%. Dans la variante contenant uniquement de la poudre d'insectes, les protéines sont des protéines animales. Dans les autres variantes, les protéines sont des protéines animales et végétales. Les produits nutritionnels selon l'invention apportent également de nombreux autres nutriments essentiels à l'homme ou l'animal.

En particulier les insectes contiennent :
- des vitamines, notamment B1, B2 et B3,
- des minéraux, notamment calcium, fer, zinc et phosphore,
- des acides gras essentiels, notamment l'acide linoléique.

Les végétaux, en particulier les céréales, apportent des fibres et des glucides lents, et les algues des fibres également ainsi que des minéraux et des acides aminés essentiels. Il s'agit en outre de produits entièrement naturels, sans additif chimique.

De plus, la forme particulière sous forme d'agglomérat de poudre permet de conserver toutes les propriétés des constituants et une homogénéité des constituants pour une bonne assimilation par l'homme ou l'animal. La consistance particulière du produit selon l'invention en fait également un produit apprécié qui peut être utilisé comme aliment pour l'homme ou l'animal, à consommer tel quel ou à cuisiner, ou comme complément alimentaire pour l'homme ou l'animal. Il peut également être utilisé pour les loisirs en particulier pour la pêche comme leurre, appât, amorce, etc. La forme agglomérée permet aussi un stockage optimisé des produits. Elle est facile d'utilisation aussi bien pour les adultes que pour les enfants. Elle facilite le dosage pour nourrir les animaux et leur donner la quantité adéquate, le dosage et la manipulation pour la préparation culinaire. La forme granulée permet également aux animaux de se nourrir plus facilement et pour les poissons, elle permet une dispersion homogène de la nourriture dans l'aquarium. La composition selon l'invention présente également une odeur particulière qui lui permet d'être utilisé comme agent odorant ou pour le moins pour son atout attractif odorant important, pour toutes les utilisation précédemment citées (alimentation humaine ou animale, loisirs comme la pêche, etc.)

Enfin, selon un autre avantage, la forme des produits selon l'invention permet de lever les problématiques psychologiques liés à l'aspect visuel des insectes pour la consommation humaine.

L'invention est à présent illustrée par des exemples:

### Exemple 1: Granulé de vers de farine (ténébrions)

Le produit de l'exemple 1 est un granulé constitué par 100% en poids de poudre de vers de farine (ténébrions).

Les granulés ont une taille de 1 mm.

Ils sont obtenus comme suit :
- séchage des vers dans un déshydrateur suivant les paramètres adaptés au dit déshydrateur,
- broyage des vers séchés sous forme de poudre fine,
- passage de la poudre dans le granulateur,
- obtention de granulés de 1 mm.

### Exemple 2: Granulé de vers de farine (ténébrions)

Le produit de l'exemple 2 est un granulé constitué par :
- 97% en poids de poudre de vers de farine,
- 3% en poids d'amidon (liant).

Les granulés ont une taille de 1 mm.

Ils sont obtenus comme suit :
- séchage des vers dans un déshydrateur suivant les paramètres adaptés au dit déshydrateur,
- broyage des vers séchés sous forme de farine fine,
- mélange de la poudre et du liant (agar agar) dans le broyeur-mélangeur-granulateur,
- obtention de granulés de 1 mm.

### Exemple 3: Granulé de vers de farine (ténébrions) et d'algues

Le produit de l'exemple 3 est un granulé constitué par :
- 97% en poids de poudre, elle-même constituée par :
   * 51,5 % de poudre de vers de farine (soit 50% en poids par rapport au poids total du produit),
   * 48,5 % de poudre d'algues spiruline (soit 47% en poids par rapport au poids total du produit),
- 3% en poids d'agar agar (liant),

Les granulés ont une taille de 1 mm. Ils sont obtenus comme suit :
- séchage des vers dans un déshydrateur suivant les paramètres adaptés au dit déshydrateur,
- broyage des vers séchés sous forme de poudre fine,
- broyage de la spiruline séchée sous forme de poudre fine,
- mélange des deux poudres dans le broyeur-mélangeur-granulateur,
- obtention de granulés de 1 mm.

### Exemple 4: Granulé de vers de farine (ténébrions) et de grillons

Le produit de l'exemple 4 est un granulé constitué par :
- 97% en poids de poudre, elle-même constituée par :
   * 72,2 % de poudre de vers de farine (soit 70% en poids par rapport au poids total du produit),
   * 27,8% de poudre de grillons (soit 27% en poids par rapport au poids total du produit),
- 3% en poids d'agar agar (liant).

Les granulés ont une taille de 1 mm.

Ils sont obtenus comme suit :
- séchage des vers dans un déshydrateur suivant les paramètres adaptés au dit déshydrateur,
- séchage des grillons dans un déshydrateur suivant les paramètres adaptés au dit déshydrateur,
- broyage des vers séchés sous forme de poudre fine,
- broyage des grillons séchés sous forme de poudre fine,
- mélange des deux poudres dans le broyeur-mélangeur-granulateur,
- obtention de granulés de 1 mm.

### Exemple 5: Comprimé de grillons et d'algues

Le produit de l'exemple 5 est un comprimé constitué par :
- 97% en poids de poudre, elle-même constituée par :
   * 51,5 % de poudre de grillons (soit 50% en poids par rapport au poids total du produit),
   * 48,5 % de poudre d'algues spiruline (soit 47% en poids par rapport au poids total du produit).
- 3% en poids de mousse irlandaise (liant).

Les comprimés ont une taille de 15 mm.

Ils sont obtenus comme suit :
- séchage des girllons dans un déshydrateur suivant les paramètres adaptés au dit déshydrateur,
- broyage des grillons séchés sous forme de poudre fine,
- broyage de la spiruline séchée sous forme de poudre fine,
- mélange des deux poudres et du liant dans le mélangeur,
- passage du mélange dans la presse-comprimeuse,
- obtention de comprimés de 15 mm,

### Exemple 6: Pastille de vers de farine et de céréales (soja)

Le produit de l'exemple 6 est une pastille constituée par :
- 100% en poids de poudre, elle-même constituée par :
   * 70% de poudre de vers de farine,
   * 30% de farine de soja.

Les pastilles ont une taille de 10 mm. Elles sont obtenues comme suit :
- séchage des vers dans un déshydrateur suivant les paramètres adaptés au dit déshydrateur,
- broyage des vers séchés sous forme de poudre fine,
- broyage du soja sous forme de farine fine,
- mélange des deux poudres dans le mélangeur,
- passage du mélange dans la presse-comprimeuse,
- obtention de comprimés de 10 mm.

### Exemple 7: Comprimé de vers, d'algues (laitue de mer) et de blé

Le produit de l'exemple 7 est un comprimé constitué par :
- 97% en poids de poudre, elle-même constituée par :
   * 51,5 % de poudre de grillons (soit 50% en poids par rapport au poids total du produit),
   * 20,6% de poudre d'algues spiruline (soit 20% en poids par rapport au poids total du produit),
   * 27,8% de farine blé (soit 27% en poids par rapport au poids total du produit).
- 3% d'amidon (liant).

Les comprimés ont une taille de 12 mm. Ils sont obtenus comme suit :
- séchage des vers dans un déshydrateur suivant les paramètres adaptés au dit déshydrateur,
- broyage des vers séchés sous forme de poudre fine,
- broyage de la spiruline séchée sous forme de poudre fine,
- broyage du blé séché sous forme de farine fine,
- mélange des trois poudres et du liant dans le mélangeur,
- passage du mélange dans la presse-comprimeuse,
- obtention de comprimés de 12 mm.

### Exemple 8: Pastille de vers et de céréales (blé, soja et mais)

Le produit de l'exemple 8 est une pastille constituée par :
- 97% en poids de poudre, elle-même constituée par :
   * 51,5 % de poudre de grillons (soit 50% en poids par rapport au poids total du produit),
   * 20,6% de farine de blé (soit 20% en poids par rapport au poids total du produit),
   * 10,3% de farine de maïs (soit 10% en poids par rapport au poids total du produit),
   * 17,5% de farine de soja (soit 17% en poids par rapport au poids total du produit).
- 3% de fécule (liant).

Les pastilles ont une taille de 8 mm. Elles sont obtenues comme suit :
- séchage des vers dans un déshydrateur suivant les paramètres adaptés au dit déshydrateur,
- broyage des vers séchés sous forme de poudre fine,
- broyage du blé séché sous forme de farine fine,
- broyage du maïs séché sous forme de farine fine,
- broyage du soja séché sous forme de farine fine,
- mélange des quatre poudres et du liant dans le mélangeur,
- passage du mélange dans la presse-comprimeuse,
- obtention de pastilles de 8 mm.

### Exemple 9: Comprimé de grillons

Le produit de l'exemple 9 est un comprimé constitué par :
- 99% en poids de poudre de grillons,
- 1% de miel (liant).

Les comprimés ont une taille de 10 mm. Ils sont obtenus comme suit :
- séchage des grillons dans un déshydrateur suivant les paramètres adaptés au dit déshydrateur,
- broyage des grillons séchés sous forme de poudre fine,
- mélange de la poudre et du liant dans le mélangeur,
- passage du mélange dans la presse-comprimeuse,
- obtention de comprimés de 10 mm.

### Exemple 10: Granulés de vers, d'algues (spiruline) et de céréales (blé, maïs, soja)

Le produit de l'exemple 10 est un granulé constitué par :
- 95% en poids de poudre, elle-même constituée par :
   * 51,5 % de poudre de grillons (soit 50% en poids par rapport au poids total du produit),
   * 20,6% de poudre d'algues spiruline (soit 20% en poids par rapport au poids total du produit),
   * 15,5% de farine de blé (soit 15% en poids par rapport au poids total du produit),
   * 5,2 % de farine de maïs (soit 5% en poids par rapport au poids total du produit),
   * 5,2% de farine de soja (soit 5% en poids par rapport au poids total du produit),
- 5% d'amidon (liant).

Les granulés ont une taille de 3 mm. Ils sont obtenus comme suit :
- séchage des vers dans un déshydrateur suivant les paramètres adaptés au dit déshydrateur,
- broyage des vers séchés sous forme de poudre fine,
- broyage de la spiruline séchée sous forme de farine fine,
- broyage du blé, maïs et soja séchés sous forme de farine fine,
- passage et mélange des trois poudres et du liant dans le broyeur- mélangeur-granulateur,
- obtention de granulés de 3 mm.

Les produits de nutrition des exemples 1 à 10 et les produits de nutrition selon l'invention en général, peuvent être utilisés pour la consommation humaine (notamment agrémentation des plats culinaires [décoration et/ou intégration], aliments de consommation directe, compléments alimentaires) et pour la consommation animale (notamment aquariophilie, oiseaux, nouveaux animaux de compagnie, compléments alimentaires, volailles, pisciculture, aquaculture) ainsi que pour la pêche comme leurres, appâts ou amorces.

## Revendications

1. Produit nutritionnel destiné à l'homme ou l'animal, se présentant sous forme de granulé, comprimé, granule, pellet, bille, agglomérat ou pastille, de taille comprise entre 1 et 15 mm, constitué d'une poudre agglomérée et éventuellement d'un liant d'origine végétale, animale ou minérale, **caractérisé en ce que** :
- ladite poudre est constituée :
- de poudre d'insectes, non traitée chimiquement, constituée par au moins un insecte choisi parmi : les vers, les grillons, les criquets et les blattes, et
- éventuellement de farine d'origine végétale et/ou de poudre d'origine algale,
- au moins 50% en poids de ladite poudre est de la poudre d'insectes, et
- la teneur en protéines dans ladite poudre est comprise entre 15 et 70% en poids par rapport au poids total des constituants de la poudre.

2. Produit nutritionnel selon la précédente revendication, **caractérisé en ce que** le liant est choisi parmi les produits suivants :
- l'amidon ou la fécule,
- l'agar agar,
- la gomme arabique,
- le beurre manier,
- le roux,
- la farine ou farine fonctionnelle,
- les fruits secs et/ou les dattes
- le chia et/ou le lin
- la mousse irlandaise
- la lécithine de soja
- le miel,
- l'argile,
ou est un mélange d'au moins deux de ces produits.

3. Produit nutritionnel selon l'une des précédentes revendications, **caractérisé en ce qu'**il est obtenu par extrusion ou soufflage ou compactage de la farine.

4. Produit nutritionnel selon l'une des précédentes revendications, **caractérisé en ce que** la poudre d'insectes est constituée par au moins un insecte choisi parmi les vers suivants : les ténébrions et les vers de Morios.

5. Produit nutritionnel selon l'une des précédentes revendications, **caractérisé en ce que** la poudre d'insectes est constituée par un seul type d'insecte ou par plusieurs types d'insectes différents.

6. Produit nutritionnel selon l'une des précédentes revendications, **caractérisé en ce que** la poudre comprend de la farine d'origine végétale, obtenue à partir d'un ou plusieurs des végétaux suivants : le maïs, le soja, le blé, les légumes, les légumineuses, les fruits, les herbes comestibles et/ou les herbes médicinales.

7. Produit nutritionnel selon l'une des précédentes revendications, **caractérisé en ce que** la poudre comprend de la poudre d'origine algale, obtenue à partir d'une ou plusieurs des algues suivantes : laitue de mer, ao nori, ulve, dulse, nori, carraghénanes, wakamé, kombu, aramé, spiruline.

8. Produit nutritionnel selon l'une des revendications 1 à 5, **caractérisé en ce que** la poudre est constituée de 100% de farine d'insectes.

9. Produit nutritionnel selon l'une des revendications 1 à 5, **caractérisé en ce que** la poudre est constituée :
- entre 50 et 90% en poids de poudre d'insectes, et
- entre 10 et 50% en poids de farine d'origine végétale ou de poudre d'origine algale.

10. Produit nutritionnel selon l'une des revendications 1 à 7, **caractérisé en ce que** la poudre est constituée entre 50 et 90% en poids de poudre d'insectes et entre 10 et 50% en poids d'un mélange de farine d'origine végétale et de poudre d'origine algale.

11. Utilisation d'un produit nutritionnel selon l'une des précédentes revendications, comme aliment complet pour l'être humain ou l'animal ou comme complément alimentaire pour l'être humain ou l'animal.

12. Utilisation d'un produit nutritionnel selon l'une des revendications 1 à 10 pour la pêche comme leurre, appât, amorce.

13. Utilisation selon l'une des revendications 11 à 12 comme agent odorant.

## Patentansprüche

1. Ernährungsprodukt für Menschen oder Tiere, das in der Gestalt eines Granulats, einer Tablette, eines Körnchens, eines Pellets, eines Kügelchens, eines Agglomerats oder einer Pastille mit einer Größe zwischen 1 bis 15 mm vorliegt und das aus verdichtetem Pulver und gegebenenfalls einem Bindemittel pflanzlicher, tierischer oder mineralischer Herkunft besteht, **dadurch gekennzeichnet, dass**:
- das Pulver sich zusammensetzt aus:
- aus chemisch nicht behandeltem Insektenpulver, das sich aus mindestens einem Insekt zusammensetzt, ausgewählt aus: Larven, Grillen, Heuschrecken und Schaben, und
- gegebenenfalls Mehl pflanzlicher Herkunft und/oder von Algen stammendem Pulver,
- wenigstens 50 Gew.-% des Pulvers Insektenpulver ist, und
- der Proteingehalt in diesem Pulver zwischen 15 und 70 Gew.-% bezüglich des Gesamtgewichts der Bestandteile des Pulvers liegt.

2. Ernährungsprodukt nach dem vorhergehenden Anspruch,
**dadurch gekennzeichnet, dass** das Bindemittel unter folgenden Produkten ausgewählt ist:
- Stärke oder Stärkemehl,
- Agar-Agar,
- Gummiarabikum,
- Mehlbutter,
- Mehlschwitze,
- Mehl oder funktionelles Mehl,
- Trockenobst und/oder Datteln
- Chiasamen und/oder Leinsamen
- Irisch Moos
- Sojalecithin
- Honig,
- Ton,
oder eine Mischung von wenigstens zwei dieser Produkte ist.

3. Ernährungsprodukt nach einem der vorhergehenden Ansprüche, **dadurch gekennzeichnet, dass** dieses durch Extrusion, Aufblähen oder Verdichten des Mehls hergestellt ist.

4. Ernährungsprodukt nach einem der vorhergehenden Ansprüche, **dadurch gekennzeichnet, dass** das Insektenpulver aus wenigstens einer der Insekten zusammengesetzt ist, die unter den folgenden Larven ausgewählt sind: den Mehlkäfern und den Larven des großen Schwarzkäfers.

5. Ernährungsprodukt nach einem der vorhergehenden Ansprüche, **dadurch gekennzeichnet, dass** das Insektenpulver aus einer Art von Insekten oder mehreren Arten von verschiedenen Insekten zusammengesetzt ist.

6. Ernährungsprodukt nach einem der vorhergehenden Ansprüche, **dadurch gekennzeichnet, dass** das Pulver Mehl pflanzlicher Herkunft aufweist, das auf der Grundlage von einem oder mehreren der folgenden Gewächse erhalten wird: Mais, Soja, Weizen, Gemüse, Hülsenfrüchte, Obst, essbare Kräuter und/oder medizinische Kräuter.

7. Ernährungsprodukt nach einem der vorhergehenden Ansprüche, **dadurch gekennzeichnet, dass** das Pulver von Algen stammendes Pulver aufweist, das auf der Grundlage einer oder mehrerer der folgenden Algen erhalten worden ist: Meersalat, Aonori, Ulva, Lappentang, Nori, Carraghenane, Wakame, Kombu, Arame, Spirulina.

8. Ernährungsprodukt nach einem der Ansprüche 1 bis 5, **dadurch gekennzeichnet, dass** das Pulver zu 100% aus Mehl von Insekten zusammengesetzt ist.

9. Ernährungsprodukt nach einem der Ansprüche 1 bis 5, **dadurch gekennzeichnet, dass** das Pulver zusammengesetzt ist aus:
- zwischen 50 und 90 Gew.-% Insektenpulver, und
- zwischen 10 und 50 Gew.-% Mehl pflanzlicher Herkunft oder von Algen stammendem Pulver.

10. Ernährungsprodukt nach einem der Ansprüche 1 bis 7, **dadurch gekennzeichnet, dass** sich das Pulver zusammensetzt aus 50 bis 90 Gew.-% an Insektenpulver und aus 10 bis 50 Gew.-% einer Mischung aus Mehl pflanzlicher Herkunft und eines von Algen stammenden Pulvers.

11. Verwendung eines Ernährungsprodukts nach einem der vorhergehenden Ansprüche als alleiniges Nahrungsmittel für Menschen oder Tiere oder als Nahrungsergänzungsmittel für Menschen oder Tiere.

12. Verwendung eines Ernährungsprodukts nach einem der Ansprüche 1 bis 10, für den Fischfang als Attrappe, Lockmittel oder Köder.

13. Verwendung nach einem der Ansprüche 11 bis 12 als Geruchsstoff.

## Claims

1. A nutritional product intended for humans or animals, in the form of a granule, tablet, pill, pellet, ball, agglomerate or pastille, with a size comprising between 1 and 15 mm, comprising an agglomerated powder and optionally a binder of vegetable, animal or mineral origin, **characterised in that**:
- said powder comprising:
- insect powder, not chemically treated, comprising at least one insect chosen from: worms, crickets, locusts and cockroaches, and
- optionally flour of plant origin and/or powder of algal origin,
- at least 50% by weight of said powder is insect powder, and
- the protein content in said powder is between 15% and 70% by weight with respect to the total weight of the constituents of the powder.

2. A nutritional product according to the preceding claim, **characterised in that** the binder is chosen from the following products:
- seed starch or tuber starch,
- agar agar,
- gum arabic,
- beurre manie,
- roux,
- flour or functional flour,
- dried fruits and/or dates
- chia and/or flax
- Irish moss
- soya lecithin
- honey,
- clay,
or is a mixture of at least two of these products.

3. A nutritional product according to one of the preceding claims, **characterised in that** it is obtained by extrusion or blowing or compacting of flour.

4. A nutritional product according to one of the preceding claims, **characterised in that** the insect powder comprises at least one insect chosen from the following worms: tenebrios and Morio worms.

5. A nutritional product according to one of the preceding claims, **characterised in that** the insect powder comprises a single type of insect or several types of different insects.

6. A nutritional product according to one of the preceding claims, **characterised in that** the powder comprises flour of plant origin, obtained from one or more of the following plants: maize, soya, wheat, vegetables, legumes, fruits, edible herbs and/or medicinal herbs.

7. A nutritional product according to one of the preceding claims, **characterised in that** the powder comprises powder of algal origin, obtained from one or more of the following algae: sea lettuce, aonori, ulva, dulse, nori, carrageenans, wakame, kombu, arame, spirulina.

8. A nutritional product according to one of claims 1 to 5, **characterised in that** the powder comprises 100% insect flour.

9. A nutritional product according to one of claims 1 to 5, **characterised in that** the powder comprises:
- between 50% and 90% by weight insect powder, and
- between 10% and 50% by weight flour of plant origin or powder of algal origin.

10. A nutritional product according to one of claims 1 to 7, **characterised in that** the powder comprises between 50% and 90% by weight insect powder and between 10% and 50% by weight a mixture of flour of plant origin and powder of algal origin.

11. Use of a nutritional product according to one of the preceding claims, as a complete food for humans or animals or as a food supplement for humans or animals.

12. Use of a nutritional product according to one of claims 1 to 10 for fishing as lure, bait or chum.

13. Use according to one of claims 11 to 12 as an odouriser.
